# EUROPEAN PATENT APPLICATION

(11) **EP 1 821 003 A1**
(43) Date of publication of application: **22.08.2007**
(21) Application number: 07001543.3
(22) Date of filing: 24.01.2007
(51) Int. Cl.: F16H 57/04

(54) **Oil level adjuster**

(30) Priority: 17.02.2006 JP 2006041671
(71) Applicant: Aichi Machine Industry Co. Ltd., Nagoya-shi, Aichi 456-8601 (JP)
(72) Inventor: Sato, Motohiko, Atsuta-ku Nagoya-shi Aichi 456-8601 (JP)
(74) Representative: Schaeberle, Steffen

(57) **Abstract**

An oil level adjuster is basically provided with a plug seat, a tubular member and a drain plug. The plug seat has a lower end and an upper end with a drain bore extending between the lower and upper ends for draining oil from an oil pan. The plug seat also has a drainage passageway spaced from the upper end towards the lower end. The tubular member is removably installed in the drain bore and projects beyond the upper end of the plug seat, with the tubular member covering the drainage passageway when fully installed and exposing the drainage passageway to the drain bore when at least partially removed. The drain plug is removably installed in the drain bore of the plug seat to plug the drain bore.

## Description

### CROSS-REFERENCE TO RELATED APPLICATIONS

This application claims priority to Japanese Patent Application No. 2006-041671, filed on February 17, 2005. The entire disclosure of Japanese Patent Application No. 2006-041671 is hereby incorporated herein by reference.

### BACKGROUND OF THE INVENTION

### Field of the Invention

The present invention generally relates to oil level adjusters. More specifically, the present invention relates to an oil level adjuster that allows for more oil to be drained from an oil pan.

### Background Information

Conventionally, an oil level adjuster has a hollow tube that extends vertically from a drain opening in a bottom wall of an oil pan to provide an appropriate fill level. The oil level adjuster has a drain plug that is removably installed in drain opening for adding and draining oil from the oil pan. Using this device, at the time of oil injection, oil is injected into the oil pan to an oil level as high as the hollow tube by injecting oil after removing the drain plug from the oil pan. At the time of oil discharge, oil is discharged from the oil pan by removing the drain plug and the hollow tube from the oil pan. One example of this type of oil level adjuster is disclosed in Japanese Patent Application Laying-Open Publication No. 2004-340244

In view of the above, it will be apparent to those skilled in the art from this disclosure that there exists a need for an improved oil level adjuster. This invention addresses this need in the art as well as other needs, which will become apparent to those skilled in the art from this disclosure.

### SUMMARY OF THE INVENTION

However, it has been discovered that the oil can not be completely drained in such an oil level adjuster. In particular, this type of oil level adjuster has a seat plug is that is connected to the bottom of the oil pan for installing the drain plug and projects into the interior of the oil pan. Thus, oil can only be drained to a top end of the seat plug. In other words, when a leading end of the seat plug projects above a casing mounting surface of the oil pan, which is secured to the underside of a transmission casing, oil overflows at the time of dismantling the oil pan, bringing about circumstances under which work characteristic may become poor.

The present invention was contrived in view of the foregoing drawbacks in the above mentioned conventional oil level adjuster. One object of the present invention is to provide an oil level adjuster that is configured to reduce the amount of residual oil in an oil pan when oil is to be drained from the oil pan.

In order to achieve the above mentioned objects and other objects of the present invention, an oil level adjuster is provided that basically comprises a plug seat, a tubular member and a drain plug. The plug seat includes a lower end and an upper end with a drain bore extending between the lower and upper ends for draining oil from an oil pan. The plug seat further includes a drainage passageway spaced from the upper end towards the lower end. The tubular member is removably installed in the drain bore and projects beyond the upper end of the plug seat, with the tubular member covering the drainage passageway when fully installed and exposing the drainage passageway to the drain bore when at least partially removed. The drain plug is removably installed in the drain bore of the plug seat to plug the drain bore.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:

Figure 1 is a longitudinal cross sectional view of an oil pan in its installed state with an oil level adjuster in accordance with a first embodiment of the present invention;

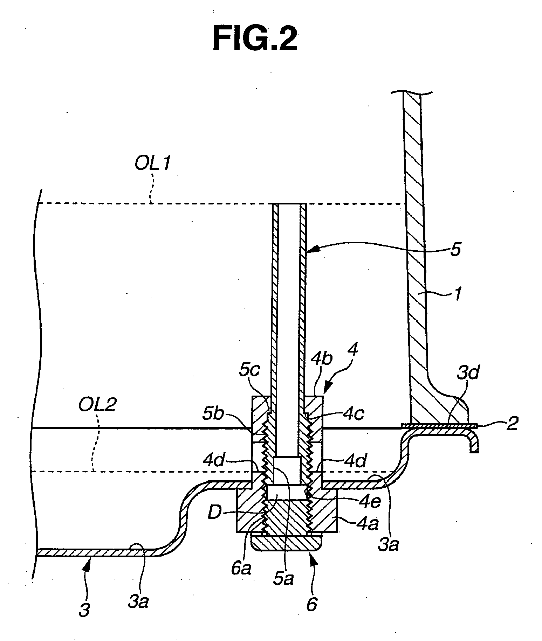

Figure 2 is an enlarged, partial cross sectional view of a portion of the oil pan in Figure 1 with the oil level adjuster in accordance with the first embodiment of the present invention; and

Figure 3 is an enlarged cross sectional view of a portion of the oil pan in Figure 1 with an oil level adjuster in accordance with a second embodiment of the present invention.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

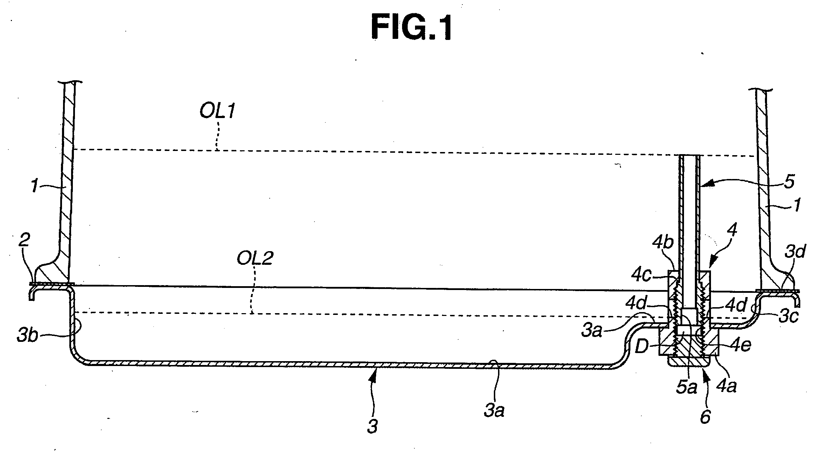

Referring initially to Figure 1, a simplified cross sectional view of a transmission casing 1 is illustrated having a gasket 2 and an oil pan 3 with an oil pan adjuster in accordance with a first embodiment of the present invention. The oil pan 3 has a generally bowl-shaped configuration having a bottom wall 3a extending longitudinally between a pair of end walls 3b and 3c which are spaced from one another at opposite ends of the oil pan 3. The end walls 3b and 3c project upwardly from the bottom wall 3a. The bottom wall 3a also extends laterally across the oil pan 3 between laterally spaced side walls, not illustrated, which also project upwardly from the bottom wall 3a. The end walls 3b and 3c and side walls (not illustrated), terminate at their upper ends in a mounting flange 3d, which is bolted or otherwise secured in usual manner to the underside of the transmission casing 1 for containing a supply of lubricating oil, such as transmission fluid. A gasket 2 is installed on the underside of the transmission casing 1 to seal the interface between the transmission casing 1 and the mounting flange 3d of the oil pan 3 for containing oil.

A plug seat 4 is fixedly mounted to the bottom wall 3a of the oil pan 3 for filling and draining the lubricating oil from the oil pan 3. This plug seat 4 basically includes an exterior oil pan portion 4a and an interior oil pan portion 4b, which together constitutes an integral nut. The exterior oil pan portion 4a forms a lower end of the plug seat 4, while the interior oil pan portion 4b forms an upper end of the plug seat 4. An outlet or drain bore D extends between the lower and upper ends of the plug seat 4 for filling and draining oil from an oil pan 3. The plug seat 4 has a generally cylindrical stepped shaped configuration formed with the drain bore D being a cylindrical through bore extending vertically along a center axis of the plug seat 4. The generally cylindrical configuration is enlarged in diameter at its lower end portion (the exterior oil pan portion 4a), which is welded or otherwise secured in usual manner to the underside of the bottom wall 3a of the oil pan 3. The interior oil pan portion 4b of the plug seat 4 projects upwardly from the bottom wall 3 a of the oil pan 3 through an opening in the bottom wall 3a into the oil pan 3.

Preferably, the drain bore D is step shaped to form an interior step or abutment 4c, which faces downwardly relative to the top surface of the upper end of the interior oil pan portion 4b of the plug seat 4. Thus, a larger diameter bore section of the drain bore D extends downwardly from the interior abutment 4c and a small diameter bore section of the drain bore D extends upwardly from the interior abutment 4c. The inner wall of the plug seat 4 which defines the small diameter bore section of the drain bore D has internal female threads 4e. Furthermore, the interior oil pan portion 4b of the plug seat 4 is formed with a plurality of drainage passageways 4d (only two shown) that fluidly communicate with the large diameter bore section of the drain bore D. In the installed state of the plug seat 4, the upper end surface of the interior oil pan portion 4b is disposed upwardly from a position of the gasket 2, while the drainage passageways 4d opening to the inside of the oil pan 3 at a position disposed downwardly from the position of the gasket 2.

A tubular member 5 is removably installed in the drain bore D and projects beyond the upper end of the plug seat 4. The tubular member is configured and arranged to cover the drainage passageways 4d when fully installed and expose the drainage passageways 4d to the drain bore D when at least partially removed. The tubular member 5 can be a tube or the like that is inserted into the drain bore D of this plug seat 4 upwardly from the lower end of the plug seat 4. The tubular member 5 has external male threads 5b formed on its circumference at its lower end portion. Thus, the tubular member 5 is threadedly installed to the plug seat 4 by the external male threads 5b engaging the internal female threads 4e of the drain bore D such that an upper end of the tubular member 5 projects upwardly from the upper end of the plug seat 4. Thus, when the tubular member 5 is in its fully installed state, the tubular member 5 covers the drainage passageways 4d at its lower end portion. Further, at its lower end surface, the tubular member 5 is formed with a tool aperture 5a configured to allow insertion of a tool. Further, the tubular member 5 is formed with a step or exterior abutment 5c for abutting engagement with the interior abutment 4c of the plug seat 4 so that abutting the interior abutment 4c of the plug seat 4 prevents further upward movement of the tubular member 5.

Furthermore, the drain bore D is plugged and sealed when a drain plug 6 is installed to the exterior oil pan portion 4a of the plug seat 4 from the underside. The drain plug 6 can be held in the plug seat 4 tight via screwing engagement of external threads 6a on the circumference of the drain plug 6 with the internal female threads 4e of the drain bore D.

With this arrangement, when it is time to drain the oil from the oil pan 3, oil in the oil pan 3 passes through the drainage passageways 4d before it is drained downwardly from the drain bore D when the tubular member 5 is removed by inserting the tool into the tool aperture 5a after removing the drain plug 6 to remove also the tubular member 5 from the plug seat 4. Thus, this arrangement makes it possible to drain the portion of oil in the oil pan 3 from the upper end of the plug seat 4 to a level OL2 in the oil pan 3, which corresponds to a height of the lower edges of the drainage passageways 4d. In other words, this arrangement makes it possible to reduce the quantity of residual oil in the oil pan 3.

Further, at the time of oil supply to the oil pan 3, it is possible to start injecting oil when the drain plug 6 only is removed because the lower end portion of the tubular member 5 covers the drainage passageways 4d by installing the tubular member 5 through screwing engagement of the tubular member 5 with the plug seat 4. Thus, oil can be added to an oil level OL1, which corresponds to the upper end of the tubular member 5. This allows the oil pan 3 to contain a predetermined quantity of oil by installing the drain plug 6 tight to plug and seal the drain bore D immediately after confirming that the oil pan has contained the predetermined quantity of oil by outflow of oil beyond the oil level OL 1 from the drain bore D.

Further, in this illustrated embodiment, the upper end surface of the plug seat 4 is disposed upwardly from the position of the gasket 2, but the drainage passageways 4d are disposed downwardly from the gasket 2, which makes it possible to lower the oil level OL2 of the residual oil in the oil pan 3 below the joining position at which the oil pan 3 is secured to the transmission casing 1. Also this arrangement prevents oil from overflowing when the oil pan 3 is dismantled, thus improving work characteristic for dismantling the oil pan 3.

this arrangement makes it possible, the plug seat 4 is a separate piece from the oil pan 3 and fixedly secured to the oil pan 3, but it may be formed as an integral part of the oil pan 3 as a matter of course.

In this illustrated embodiment, the plug seat 4 has at least two drainage passageways 4d at its side, but any number will do as long as the drainage passageways 4d drain oil well. Thus, a single drainage passageway 4d can be used if needed and/or desired.

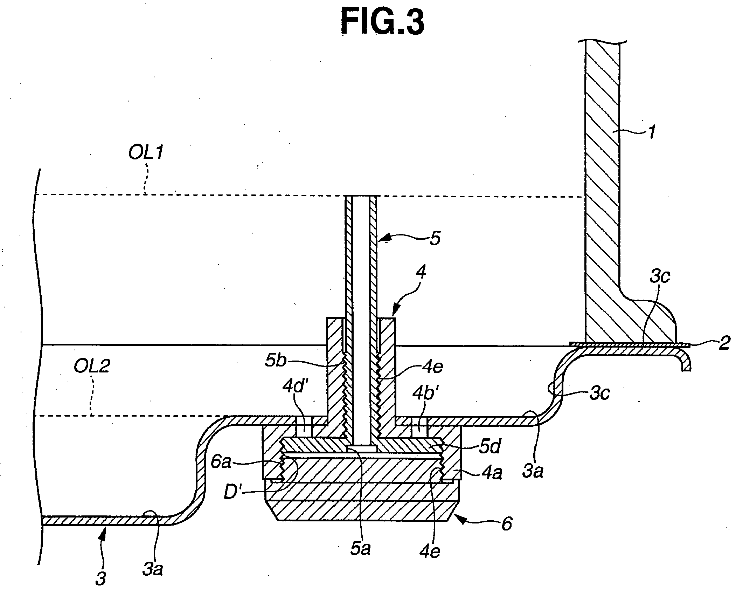

Referring now to Figure 3, an oil pan adjuster is illustrated in accordance with a second embodiment of the present invention. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity.

In the first embodiment, the drainage passageways 4d are formed on the side of the plug seat 4, but, as shown in Figure 3, for example, a plurality of drainage passageways 4d' formed through the bottom wall 3a of the oil pan 3 and vertically through the exterior oil pan portion 4a of the plug seat 4. Thus, in this illustrated embodiment, the exterior oil pan portion 4a has an enlarged diameter bore portion D' that fluidly communicates with the drainage passageways 4d'. In other words, in this illustrated embodiment, the drain bore D can be partially enlarged to form the enlarged diameter bore portion D' with the drainage passageways 4d' formed vertically therethrough to communicate with the interior of the oil pan 3 from the enlarged diameter bore portion D'. In this case, the tubular member 5 is formed with a flange portion 5d coextending with the enlarged diameter bore portion D' such that the flange portion 5d covers the drainage passageways 4d' when the tubular member 5 is installed through screwing engagement of the tubular member 5 with the plug seat 4, and it uncovers the drainage passageways 4d' when the tubular member 5 is removed from the plug seat 4 to allow drain of oil in the oil pan 3.

### GENERAL INTERPRETATION OF TERMS

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. Also as used herein to describe the above embodiment(s), the following directional terms "forward, rearward, above, downward, vertical, horizontal, below and transverse" as well as any other similar directional terms refer to those directions of a vehicle equipped with the present invention. Accordingly, these terms, as utilized to describe the present invention should be interpreted relative to a vehicle equipped with the present invention.

While only selected embodiments have been chosen to illustrate the present invention, it will be apparent to those skilled in the art from this disclosure that various changes and modifications can be made herein without departing from the scope of the invention as defined in the appended claims. For example, the size, shape, location or orientation of the various components can be changed as needed and/or desired. Components that are shown directly connected or contacting each other can have intermediate structures disposed between them. The functions of one element can be performed by two, and vice versa. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

## Claims

1. An oil level adjuster comprising:
a plug seat (4) including a lower end and an upper end with a drain bore (D) extending between the lower and upper ends for draining oil from an oil pan (3), the plug seat (4) further including a drainage passageway (4d) spaced from the upper end towards the lower end;
a tubular member (5) removably installed in the drain bore (D) and projecting beyond the upper end of the plug seat (4), with the tubular member (5) covering the drainage passageway (4d) when fully installed and exposing the drainage passageway (4d) to the drain bore (D) when at least partially removed; and
a drain plug (6) removably installed in the drain bore (D) of the plug seat (4) to plug the drain bore (D).

2. The oil level adjuster as set forth in claim 1, wherein
the tubular member (5) and the drain plug (6) are in threaded into the drain bore (D) to be selectively installed and removed.

3. The oil level adjuster as set forth in claim 1 or 2, wherein
the plug seat (4) includes at least one additional drainage passageway (4d) that is covered by the tubular member (5) when the tubular member (5) is fully installed into the drain bore (D) and exposed by the tubular member (5) to fluidly communicate with the drain bore (D) when the tubular member (5) is at least partially removed from the drain bore (D).

4. The oil level adjuster as set forth in any one of claims 1 to 3, wherein
the plug seat (4) includes an exterior oil pan portion (4a) and an interior oil pan portion (4b) with the drainage passageway (4d') being disposed in the exterior oil pan portion (4a) so that the drainage passageway (4d') is disposed below a casing mounting surface (3d) of the oil pan (3).

5. The oil level adjuster as set forth in any one of claims 1 to 4, wherein
the plug seat (4) includes an exterior oil pan portion (4a) and an interior oil pan portion (4b) with the drainage passageway (4d) being disposed in the interior oil pan portion (4b) so that the drainage passageway (4d) is disposed above a bottom wall (3a) of the oil pan (3).
